# EUROPEAN PATENT APPLICATION

(11) **EP 3 581 694 A1**
(43) Date of publication of application: **18.12.2019**
(21) Application number: 19185629.3
(22) Date of filing: 04.01.2017
(51) Int. Cl.: D06F 37/06, D06F 37/04

(54) **LIFTER FOR LAUNDRY TREATING APPARATUS**

(30) Priority: 05.01.2016 KR 20160001209
(62) Divisional of application: 17150288.3
(71) Applicant: LG Electronics Inc., Seoul 07336 (KR)
(72) Inventor: Lee, Kilryong, Seoul 08592 (KR); Jeon, Byeongha, Seoul 08592 (KR); Ahn, Jinseok, Seoul 08592 (KR)
(74) Representative: Vossius & Partner Patentanwälte Rechtsanwälte mbB

(57) **Abstract**

The present disclosure relates to a lifter (100) for a laundry treating apparatus, the lifter (100) comprising a first member (110) mounted at an inner surface of a drum; and a second member (120) mounted on the first member (110), and protruded toward an inside of the drum, wherein the first member (110) comprises a washing water inlet portion (115) formed to overlap with part of a hole formed on the drum to introduce washing water, and wherein the second member (120) comprises a body (121) protruded toward an inside of the drum to accommodate washing water therein and a plurality of washing water discharge holes (125) located at an upper portion of the body (121) and formed along one direction to discharge washing water accommodated in the body (121) from an outside of the drum.

## Description

The present disclosure relates to a lifter used for a laundry treating apparatus.

A laundry treating apparatus is an apparatus for putting clothes, bedding, and the like (hereinafter, referred to as laundry) into a drum to remove contamination on laundry. The laundry treating apparatus may perform the processes of washing, rinsing, dehydration, drying and the like. The laundry treating apparatus is divided into a top loading type and a front loading type, based on the type of putting laundry into the drum. A front loading type washing machine is typically referred to as a drum washing machine.

The laundry treating apparatus may be typically configured to include a body that forms an external appearance, a tub accommodated into the body, a drum rotatably mounted within the tub to put laundry thereinto, and a detergent supply apparatus configured to supply detergent into the drum. When the drum is rotated by a motor in a state that washing water is supplied to laundry accommodated into the drum, dirt on the laundry may be removed by friction between the drum and the washing water.

A lifter configured to help the washing of laundry by the rise and fall of the laundry during the rotation of the drum is located on an inner circumferential surface of the washer drum. The lifter is an apparatus for helping the washing of laundry by lifting up and then letting fall the laundry as the drum rotates after putting detergent, washing water, and laundry into the drum. The lifter may be located within the drum to provide an effect of preventing damage of the laundry, reducing water usage, and obtaining knocking, rubbing and washing of the laundry. The lifter may be attached to an inner circumferential surface of the drum to accommodate water into an inner space of the lifter and then perform the role of spraying water to the laundry within the drum.

A lifter in the related art may be typically coupled to the drum through an additional fastening member and thereby may cause a performance deterioration of the lifter due to a defect or a failure of the fastening member. Furthermore, water flowed into the lifter may be taken out through a fastening portion between the drum and the lifter, thereby causing unnecessary discharge of washing water.

Consequently, it may be required to have a lifter with a structure capable of preventing water accommodated in the lifter from being discharged through a coupling portion between the drum and the lifter as well as not causing performance deterioration of the lifter due to a coupling between the drum and the lifter.

An object of the present disclosure is to provide a lifter having a structure capable of being attached to an inner surface of a drum.

Another object of the present disclosure is to provide a lifter having a structure capable of being firmly coupled to an inner surface of the drum.

Still another object of the present disclosure is to provide a lifter having a structure capable of reducing washing water accommodated therein from being discharged through a fastening portion between the drum and the lifter.

The above objects are among those achieved by the subject-matter of the independent claims. The dependent claims relate to further aspects of the invention.

In order to accomplish the foregoing tasks of the present disclosure, a lifter for a laundry treating apparatus according to an embodiment of the present disclosure may include a first member mounted at an inner side of a drum; and a second member mounted on the first member and protruded toward an inside of the drum, wherein the first member includes a hook portion protruded and formed along a circumference of the first member, at least part of which being disposed to cover an inner circumferential surface of the drum when inserted into a fastening hole of the drum and then slid in one direction; and a shielding portion protruded and formed at an inner side of the first member and configured to completely cover the fastening hole when the hook portion is inserted into the fastening hole and then slid in one direction.

According to an embodiment of the present invention, the shielding portion may be formed at one side of the first member to correspond to a rotational direction of the drum to prevent washing water from being discharged through the fastening hole.

According to an embodiment of the present invention, a plurality of shielding portions may be disposed to be separated from one another along one side circumference of the first member.

Here, the other side of the first member may be protruded and formed at an inner side of the first member and configured to cover only part of the fastening hole when the hook portion is inserted into the fastening hole and then slid in one direction so as to allow the introduction of washing water.

According to an embodiment of the present invention, the first member may include a washing water inlet portion formed to overlap with part of a hole formed on the drum to introduce washing water.

Here, the washing water inlet portion may include a plurality of washing water inlet holes disposed to be separated from one another along a direction in parallel to a rotational axis of the washer drum.

A lifter for a laundry treating apparatus according to an embodiment of the present invention may include a first member mounted at an inner side of a drum; and a second member mounted on the first member and protruded toward an inside of the drum, wherein the second member includes a body protruded toward an inside of the drum to accommodate washing water therein; and a plurality of protrusion potions located along a lower circumference of the body.

Furthermore, a plurality of mounting holes into which protrusion portions of the second member are inserted to be coupled to the second member may be formed on the first member along a lower circumference.

Here, a protruding portion of the second member may be inserted into a mounting hole of the first member and the protruding portion may be bent to couple the first member to the second member.

Furthermore, the second member may include a plurality of washing water discharge holes located at an upper portion of the body and formed along one direction to discharge washing water accommodated in the body from an outside of the drum.

According to an embodiment of the present invention, a screw insertion hole may be formed at one side of the first member to fix the first member to an inner surface of the drum with screw fastening.

According to an embodiment of the present invention, the first member may be formed of stainless steel, and the second member may be formed of plastic.

A laundry treating apparatus according to the present disclosure may be inserted into a fastening hole of the drum through a hook portion to support an inner circumferential surface of the drum to be coupled to the drum, thereby preventing performance deterioration due to coupling to the drum.

A laundry treating apparatus according to the present disclosure may prevent washing water accommodated within the lifter from being discharged to an outside by the shielding portion formed on the first member even when the drum rotates during the washing process, and thus prevent the unnecessary discharge of washing water and discharge the washing water through the washing water discharge hole, thereby maintaining the performance of the lifter.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIG. 1 is a perspective view illustrating the entire structure of a laundry treating apparatus;
FIG. 2 is a perspective view illustrating a lifter attached to an inner circumferential surface of a drum;
FIG. 3 is an exploded view illustrating the internal structure of a drum including the drum and a lifter attached to the drum;
FIG. 4 is a perspective view in which the lifter is seen from an inside of the drum;
FIG. 5 is an exploded view illustrating the entire structure of the lifter;
FIG. 6 is a perspective view illustrating a first member constituting the lifter;
FIG. 7A is a view illustrating a shape in which a protruding portion of a second member is inserted into a mounting hole of the first member;
FIG. 7B is a view illustrating a shape in which a protruding portion of a second member is inserted and coupled to a mounting hole of the first member;
FIG. 7C is a view illustrating a shape in which a protruding portion of a second member is inserted into a mounting hole of the first member and then bent;
FIG. 8 is a view illustrating a shape in which the lifter is coupled to the drum;
FIG. 9A is a view illustrating a shape in which a hook portion of the first member is inserted into a fastening hole of the drum;
FIG. 9B is a view illustrating a shape in which the hook portion is slid;
FIG. 9C is a view illustrating a shape in which the hook portion is slid and then coupled to the drum;
FIG. 9D is a view illustrating a shape in which a shape in which the lifter is coupled to an inner circumferential surface of the drum is seen from an outside of the drum;
FIG. 10 is a view illustrating a shape in which the lifter is coupled to an inner circumferential surface of the drum and its enlarged shape;
FIG. 11 is a view in which the drum is seen from a front side of the body; and
FIG. 12 is a view illustrating a shape in which washing water is introduced into the lifter and then discharged into the drum through a washing water discharge hole.

### DETAILED DESCRIPTION OF THE INVENTION

Hereinafter, a lifter for a laundry treating apparatus associated with the present disclosure will be described in more detail with reference to the accompanying drawings.

Even in different embodiments according to the present disclosure, the same or similar reference numerals are designated to the same or similar configurations, and the description thereof will be substituted by the earlier description. Unless clearly used otherwise, expressions in the singular number used in the present disclosure may include a plural meaning.

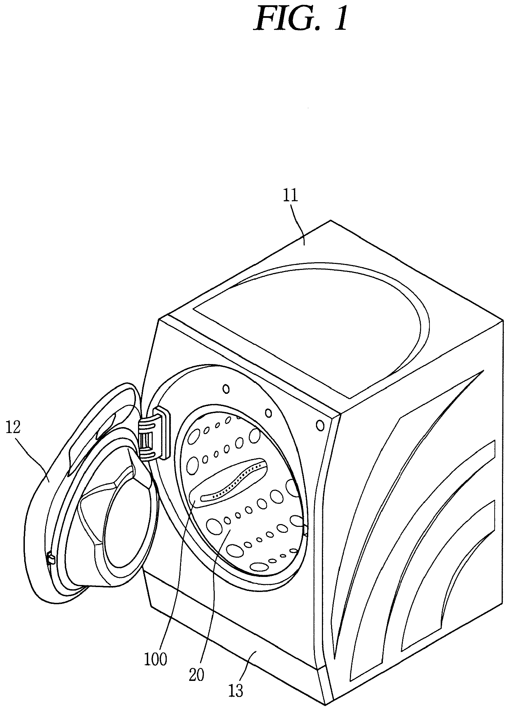

FIG. 1 is a perspective view illustrating the entire structure of a laundry treating apparatus.

The laundry treating apparatus may include a laundry treating apparatus body 11 forming an appearance, a drum 20 rotatably mounted within the body 11 to put laundry thereinto, a lifter 100 provided within the drum 20, and a door 12 provided on a front surface of the body 11, and a detergent inlet cover 13 for covering a detergent inlet for putting in detergent is located at a lower portion of the body 11. Furthermore, the laundry treating apparatus may include a duct, a heat exchanger, and the like therein to circulate air for the drying of laundry within the drum.

The lifter 100 may be provided on an inner circumferential surface 22 of the drum 20 to help the washing of the laundry due to the rise and fall of the laundry during the rotation of the drum 20. The lifter 100 is an apparatus for helping the washing of laundry by lifting up and then letting fall the laundry as the drum 20 rotates after putting detergent, washing water and laundry into the drum 20. The lifter 100 may prevent laundry within the drum 20 from getting tangled, to provide an effect of preventing damage of the laundry, reducing water usage, and to obtain knocking, rubbing and washing the laundry.

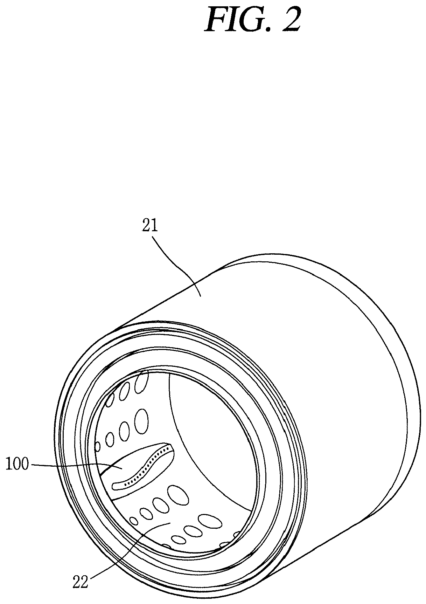

FIG. 2 is a perspective view illustrating a shape of the lifter 100 provided on an inner circumferential surface 22 of the drum 20.

The lifter 100 is formed to extend along a direction in parallel to a rotational axis of the drum, and provided along an inner circumferential surface 22 of the drum body 21. A plurality of lifters 100 may be typically provided on the inner circumferential surface 22 of the drum, but when the lifters 100 are asymmetrically provided based on a rotational axis of the drum, there is a concern that vibration and noise occur as the drum rotates, and thus the plurality of lifters 100 may be preferably provided at predetermined angles around the rotational axis of the drum.

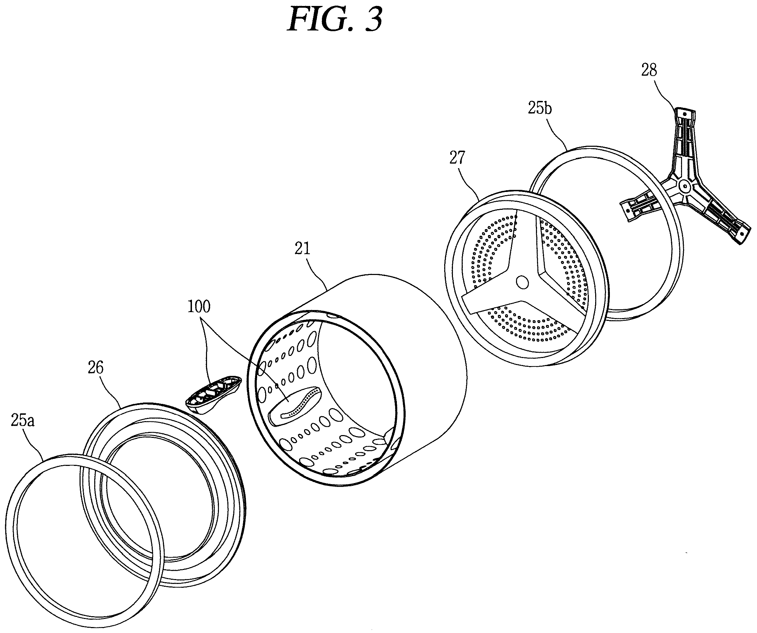

FIG. 3 is an exploded view illustrating the internal structure of a drum including the drum used in the present disclosure and the lifter 100 attached to the drum.

The drum may include a front drum member 26, a drum body 21, a lifter 100, a rear drum member, a balancer 25a, 25b, and a spider 28, and when those members are sequentially coupled as illustrated in FIG. 3, they have a shape of the drum in FIG. 2. Considering the role of each member constituting the drum disclosed in FIG. 3, the balancer 25a, 25b is a member for suppressing vibration as the drum rotates, and the spider 28 is a member of performing the role of providing a rotational force to the drum. The lifter 100 is a member of performing the role of lifting up and then falling laundry within the drum as disclosed above, thereby performing the role of enhancing the washing performance through a fall head.

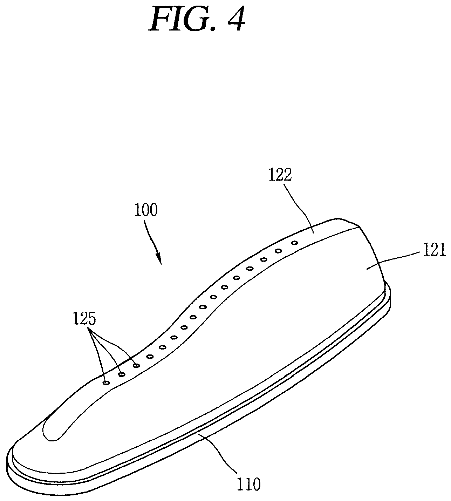

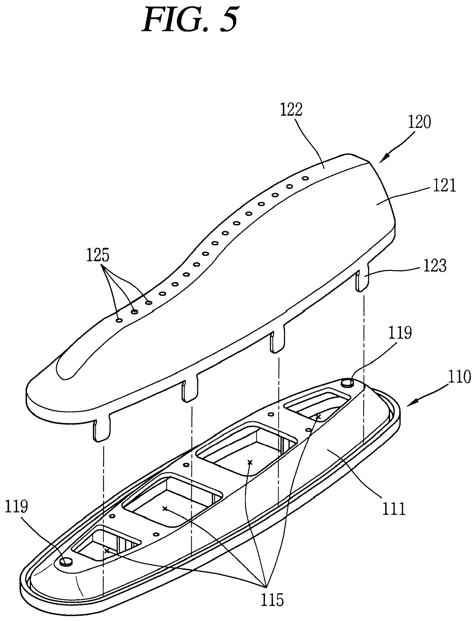

FIGS. 4 and 5 are views illustrating the structure of the lifter 100.

As illustrated in FIG. 4, the lifter 100 is formed by coupling a first member 110 to a second member 120, and the second member 120 is located on the first member 110. The lifter 100 may have a streamlined or S-shape, and may have a nonlinear structure twisted by a predetermined angle. Through this, washing water within the drum may more efficiently flow by the lifter 100 as the drum rotates.

FIG. 5 is a view illustrating a shape in which the second member 120 is coupled on the first member 110.

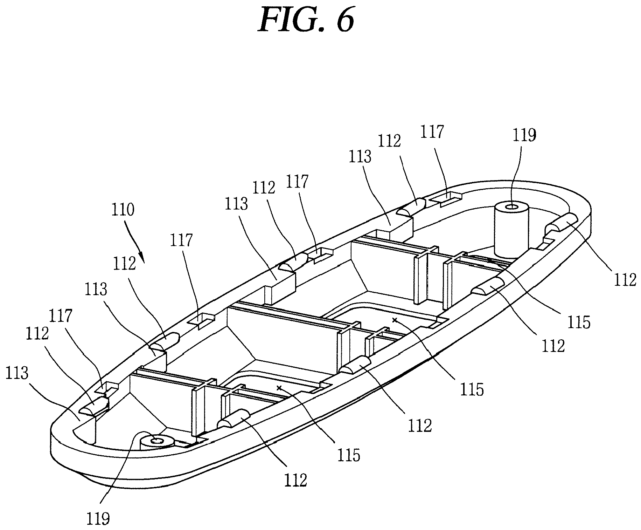

First, the first member 110 will be considered through a lower end portion of FIG. 5 and FIG. 6. An upper surface of the first member 110 is illustrated at a lower portion of FIG. 5, and a lower surface of the first member 110 is illustrated in FIG. 6. The first member 110 may include a body 111, a hook portion 112, a shielding portion 113, a mounting hole 117, a washing water inlet hole 115a, and a screw insertion hole 119.

The body 111 of the first member forms an entire structure of the first member 110, and is formed to extend in a direction in parallel to a rotational axis of the drum and coupled and provided on an inner circumferential surface 22 of the drum in parallel to the rotational axis of the drum.

The first member 110 may include a washing water inlet portion 115. The washing water inlet portion 115 is configured with a hole through the first member 110 to introduce washing water into the lifter 100. The washing water inlet portion 115 is formed to overlap with part of a hole formed on the drum.

The washing water inlet portion 115 may include a plurality of washing water inlet holes 115a. As illustrated in FIG. 5, the washing water inlet holes 115a are respectively disposed to be separated from one another in a direction in parallel to a rotational axis of the washer drum, and have a shape that passes through the first member 110.

Washing water is introduced into the drum from a tub as the drum rotates during the washing process of the laundry treating apparatus, and the washing water introduced through holes formed on the drum is introduced into the lifter 100 through the washing water inlet holes 115a, respectively, overlapping with the holes formed on the drum.

The screw insertion hole 119 is formed at one side of the first member 110 to perform the role of fixing to the drum. The first member 110 may be fixed to an inner surface of the drum through the screw insertion hole 119 with screw fastening. The screw insertion holes 119 may be formed at both ends of the first member 110 as illustrated in FIG. 5, and a plurality of washing water inlet holes 115a may be located between the washing water inlet holes 115a of the first member 110. The screw insertion hole 119 may have a typical shape into which a screw is inserted.

FIG. 6 is view illustrating a rear surface of the first member 110 coupled to the inner circumferential surface 22 of the drum.

Looking at a rear surface of the first member 110, it is seen that the first member 110 includes a mounting hole 117, a hook portion 112, and a shielding portion 113.

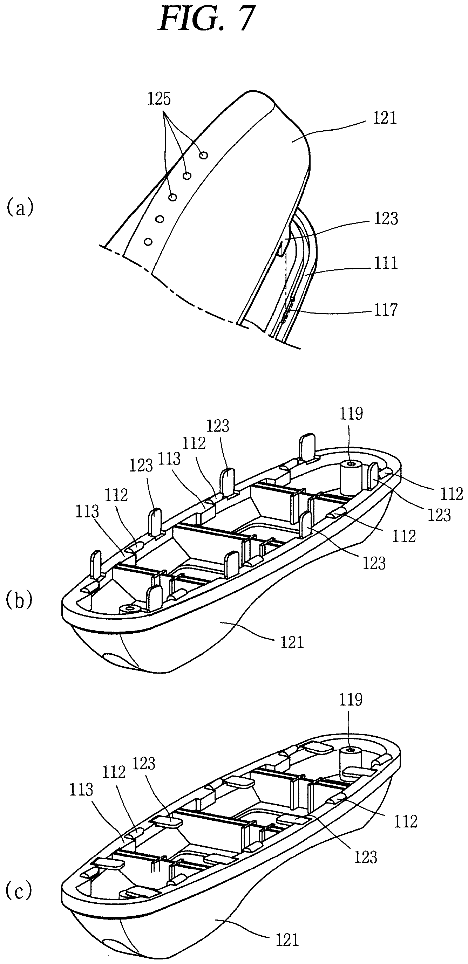

The mounting hole 117 is a hole configured to couple the first member 110 to the second member 120, and a protruding portion 123 of the second member 120 is inserted into the mounting hole 117, thereby coupling the first member 110 to the second member 120. Referring to FIG. 7A, the mounting hole 117 is formed along a circumference of the first member 110, and has a corresponding shape to allow the protruding portion 123 of the second member 120 to be inserted thereinto. The mounting holes 117 are locates at a plurality of positions along a circumference of the first member 110.

The hook portion 112 is protruded and formed along a circumference of a lower surface of the first member 110 to perform the role of fixing the first member 110 to the drum. The hook portion 112 has a shape of a ring portion to support one side of the drum when inserted and then slid as illustrated in FIG. 6.

The hook portion 112 is located to be inserted into a fastening hole located on the drum, and then slid and fixed to the drum to support one side of the drum. A plurality of hook portions 112 are located along a circumference of the first member 110 as illustrated in FIG. 6, and located to face each other. The hook portion 112 may have a shape bent toward a central portion of the first member 110. The hook portion 112 is inserted into a fastening hole 24 of the drum and then slid in one direction, and at least part of the hook portion 112 is disposed to cover the inner circumferential surface 22 of the drum.

The shielding portion 113 is protruded and formed at an inner side of the first member 110 to cover the fastening hole. The shielding portion 113 performs the role of completely covering the fastening hole when inserted into the fastening hole and then slid in one direction. The shielding portion 113 is formed at one side of the first member 110 to correspond to a rotational direction of the drum to prevent washing water from being discharged through the fastening hole 24 of the drum. A plurality of shielding portions 113 are disposed to be separated from one another along one side circumference portion of the first member 110 in a direction of extending the first member 110.

A centrifugal force is generated as the drum rotates, and the shielding portion 113 covering the fastening hole is located relatively far away based on a rotational direction of the drum, and thus washing water accommodated in the lifter 100 is not discharged in spite of the rotation of the drum. In other words, as illustrated in FIG. 6, it is seen that the shielding portion 113 is formed only in an upward direction based on the major axis passing through a center of the first member 110 having an elliptical shape.

The hook portion 112 protruded and formed at an inner side of the first member 110 inserted into the fastening hole and slid in one direction to cover only part of the fastening hole 24 of the drum is formed at the other side of the first member 110 at which the shielding portion 113 is not located. As illustrated in FIG. 6, it is seen that the shielding portion 113 is not formed at a lower side based on the major axis of the first member 110. Accordingly, part of washing water may be introduced into the lifter 100 through the portion. The first member 110 may be formed of synthetic resin, and for example, the first member 110 may be formed of injected plastic. However, the present disclosure may not be necessarily limited to that material.

Considering the second member 120 through FIG. 5, the second member 120 may include a body 121, a protruding portion 123, and a washing water discharge hole 125.

The body 121 of the second member 120 may be protruded and formed at an inside of the drum to accommodate washing water in an inner space. The body 121 of the second member 120 may have a nonlinear shape.

A plurality of protruding portions 123 are formed along a lower circumference of the body 121. The protruding portion 123 of the second member 120 is inserted into the mounting hole 117 formed along a circumference of the first member 110, and thus the first member 110 is coupled to the second member 120. As illustrated in FIG. 5, the protruding portion 123 is formed at a lower portion of the body 121 of the second member 120, and located toward a lower portion from an upper portion.

The washing water discharge hole 125 is located at an upper portion of the body 121 to discharge washing water accommodated in the body 121 of the second member 120 from an outside of the drum, and formed in one direction. Specifically, an upper surface of the second member body 121 extended along one direction is located at an upper portion of the body 121 of the second member 120, and a plurality of washing water discharge holes 125 are formed on an upper surface of the body 121 of the second member 120. Washing water accommodated in the lifter 100 may be discharged toward the drum through the washing water discharge holes 125 to perform the role of helping the washing of laundry accommodated within the drum. Furthermore, water usage during the washing process may be reduced through water supply into the drum through the lifter 100.

FIG. 7 is a view illustrating a process of coupling between the first member 110 and the second member 120 constituting the lifter 100.

FIG. 7A is a view illustrating a shape in which the protruding portion 123 of the second member 120 is inserted into the mounting hole 117 of the first member 110, and a plurality of protruding portions 123 formed on the second member 120 are inserted into a plurality of mounting holes 117 formed on the first member 110 at the corresponding positions, thereby coupling the first member 110 to the second member 120.

FIG. 7B is a view illustrating a shape in which the protruding portion 123 of the second member 120 is inserted into the mounting hole 117 of the first member 110 such that the first member 110 is located at an upper portion of the lifter 100 and the second member 120 is located at a lower portion of the lifter 100. FIG. 7B is a view illustrating a shape in which the protruding portion 123 of the second member 120 is inserted into the mounting hole 117 of the first member 110 and protruded upward.

FIG. 7C is a view illustrating a shape in which the protruding portion 123 of the second member 120 inserted into the mounting hole 117 of the first member 110 is bent for fixing. The protruding portion 123 of the second member 120 inserted into the mounting hole 117 of the first member 110 and protruded upward is bent for coupling between the first member 110 and the second member 120. The bending of the protruding portion 123 is carried out in an inward direction of the first member 110.

In other words, the protruding portion 123 of the second member 120 is inserted and then bent to the mounting hole 117 of the first member 110, thereby coupling the first member 110 to the second member 120.

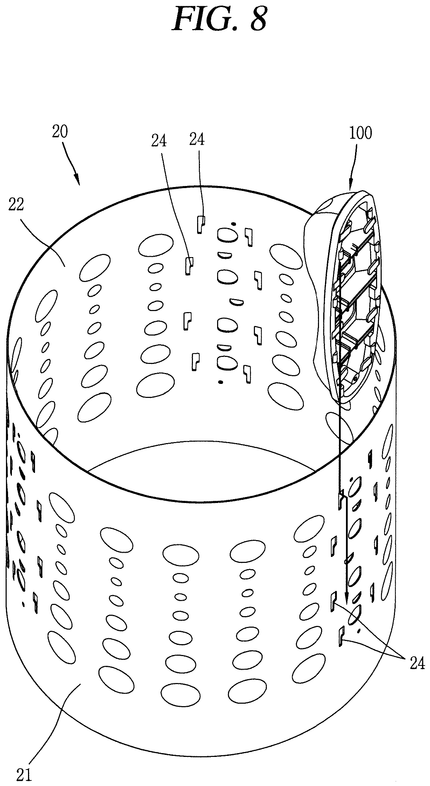

FIG. 8 is a view illustrating a shape in which the lifter 100 is coupled to the drum.

A plurality of fastening holes for fixing the lifter 100 are located on the drum, and the hook portion 112 of the first member 110 of the lifter 100 is inserted into the fastening hole 24 of the drum and then slid, and a screw is fastened to the screw insertion hole 119 located at upper and lower portions of the first member of the lifter 100, thereby fixing the lifter 100 to the drum.

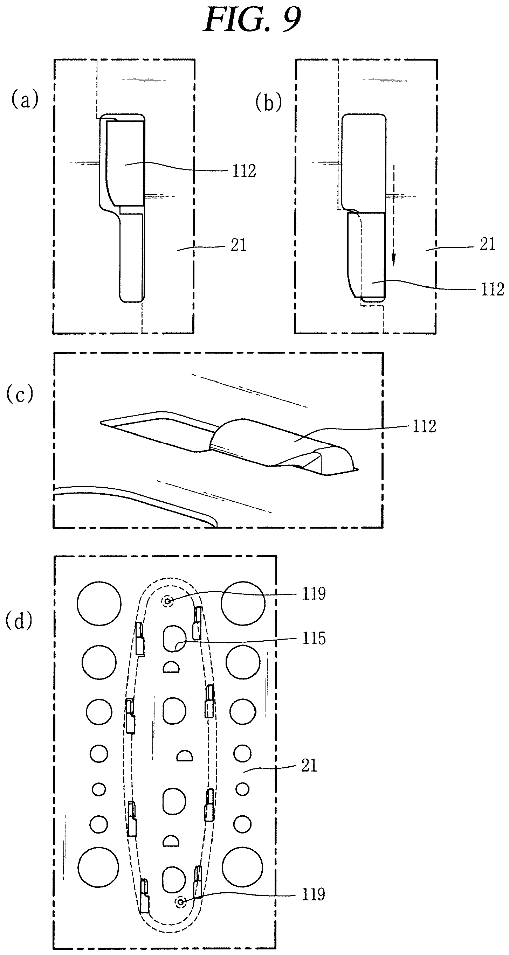

FIG. 9A is a view illustrating a shape in which the hook portion 112 of the first member 110 is inserted into the fastening hole 24 of the drum. The hook portion 112 of the first member 110 is inserted into the fastening hole 24 of the drum to fix the lifter 100 to the drum.

FIG. 9B is a view illustrating a shape in which the hook portion 112 is slid. The hook portion 112 of the first member 110 is inserted into the fastening hole 24 of the drum, and then slid along an arrow direction on the drawing. The hook portion 112 has a shape of a ring portion to support one side of the drum, and hook portion 112 may be slid to support one side of the drum and thus more closely fixed to the drum.

FIG. 9C is a view illustrating a shape in which the hook portion 112 is slid and then coupled to the drum. As illustrated in the drawing, the hook portion 112 supports the drum body 21. Specifically, the hook portion 112 of the first member 110 is located to cover at least part of outer and inner circumferential surfaces of the drum.

FIG. 9D is a view illustrating a shape in which a shape in which the lifter 100 is coupled to an inner circumferential surface 22 of the drum is seen from an outside of the drum. As illustrated in the drawing, part of the compressor 21 is supported by each hook portion 112 located on the first member 110, and the shielding portion 113 of the first member 110 is interposed on a fastening hole on the left. The drum body 21 may be fixed to the screw insertion hole 119 located on the first member 110 by screw fastening, thereby locating the lifter 100 on an inner circumferential surface of the drum.

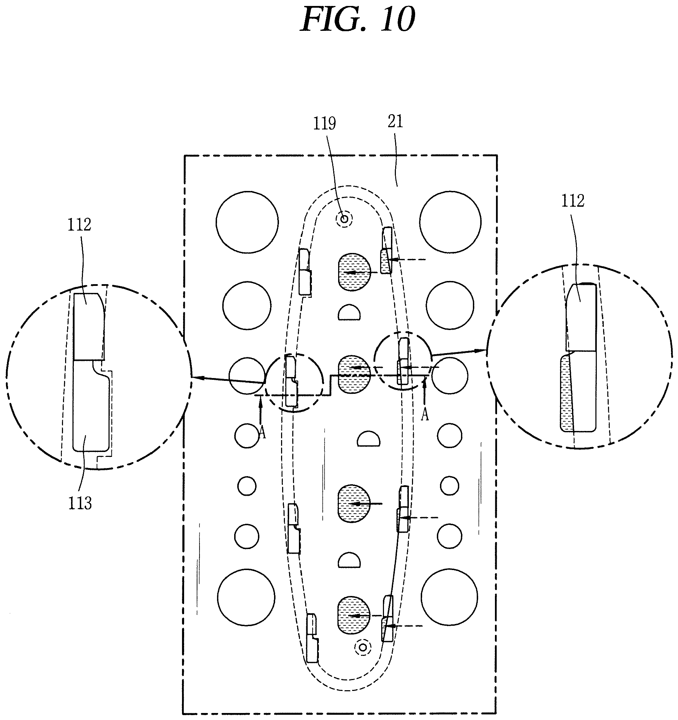

FIG. 10 is a view illustrating a shape in which the lifter 100 is coupled to an inner circumferential surface 22 of the drum and its enlarged shape, and an enlarged view on the right illustrates a structure in which washing water can be accommodated within the lifter 100, and an enlarged view on the left illustrates a structure in which washing water accommodated within the lifter 100 is not discharged to an outside. The lifter 100 and the drum are coupled to each other through supporting through the hook portion 112 of the first member 110 and screw fastening. The hook portion 112 of the first member 110 supports part of the inner circumferential surface 22 and outer circumferential surface of the drum, and is coupled to the drum by inserting a screw into the screw insertion hole 119 of the first member 110.

When each hook portion 112 of the first member 110 is inserted into each fastening hole of the drum and then slid, the shielding portion 113 of the first member 110 covers the fastening hole 24 of the drum. The shielding portion 113 completely covers the fastening hole when the hook portion 112 is inserted into the fastening hole and then slid in one direction, thereby preventing washing water from being discharged. The first member 110 having an elliptical shape has a major axis, and the fastening hole is completely covered through the shielding portion 113 of the first member 110 on the left based on the major axis.

Looking at an enlarged view on the left in FIG. 10, it is seen that the shielding portion 113 is located at a lower end of the hook portion 112 to cover the fastening hole 24 of the drum. The shielding portion 113 is protruded and formed toward an inner side of the first member 110 along one side circumference of the first member 110, and the shielding portion 113 completely covers the fastening hole 24 of the drum to thereby prevent washing water being introduced into the lifter 100 through the fastening hole 24 of the drum from being discharged to an outside.

Looking at an enlarged view on the right in FIG. 10, there is shown a situation in which part of the fastening hole 24 of the drum is exposed on the right based on the major axis of the first member 110. The shielding portion 113 is not formed on the right based on the major axis passing through a center of the first member 110, and thus part of the fastening hole is exposed to an outside at a side on which the shielding portion 113 is not formed, thereby introducing part of washing water into the lifter 100 through that portion.

In order to let washing water flow along an arrow direction of FIG. 10, through the washing water inlet hole 115a, the shielding portion 113 is formed to overlap with a hole of the drum, wherein part of washing water is introduced into the lifter 100 through part of the fastening hole exposed to an outside.

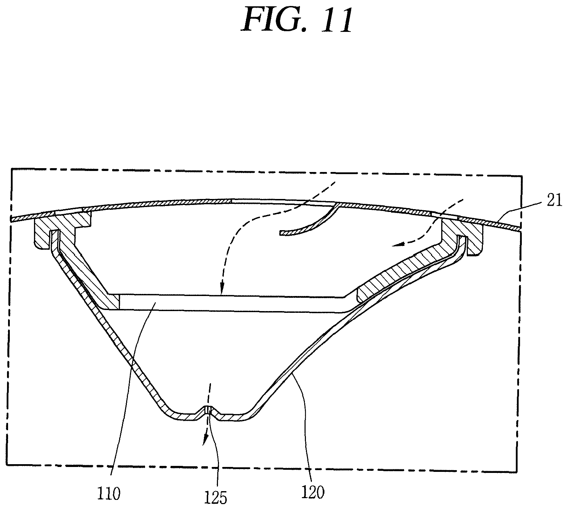

FIG. 11 is a cross-sectional view in which the lifter is cut along line A, illustrating a shape in which washing water is introduced into the lifter 100 and then discharged to an inside of the drum through the washing water discharge hole 125.

When the drum rotates, washing water is introduced into the drum through a tub surrounding the drum. The washing water is partly accommodated even in the lifter 100 attached to the inner circumferential surface 22 of the drum, and passed through a hole of the drum and discharged into the drum through the washing water discharge hole 125 of the second member 120 through the washing water inlet hole 115a of the first member 110 formed to overlap with the hole of the drum. Alternatively, part of the washing water is introduced into the lifter 100 even through the fastening hole on which the shielding portion 113 is not located. An arrow in FIG. 11 indicates a moving direction of washing water.

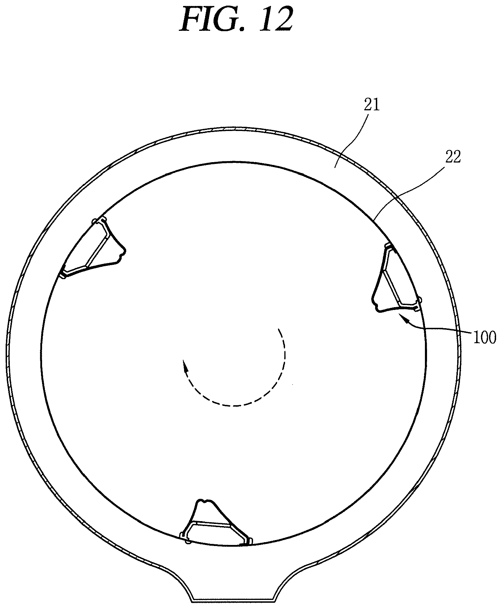

FIG. 12 is a view in which the drum is seen from a front side of the body, illustrating a shape in which the lifter 100 is disposed within the drum. A plurality of lifters 100 are provided along the inner circumferential surface 22 of the drum. Unless the lifters 100 are not symmetrically disposed based on a rotational axis of the drum, there is a concern that noise and vibration occur as the drum rotates, and laundry may not be uniformly lifted up and thus washing may not be uniformly carried out on the entire laundry. Accordingly, it is preferable that a plurality of lifters 100 are symmetrically located based on the rotational axis of the drum as illustrated in FIG. 12. In this case, laundry within the drum may be caught in the lifters 100 to be effectively lifted up to a predetermined height, and washing water within the drum may more efficiently flow to enhance washing effect.

The configurations and methods according to the above-described embodiments will not be limited to the foregoing lifter 100 for a laundry treating apparatus, and configured to make various modifications thereto.

The present invention is also defined by the following items.
1. A lifter (100) for a laundry treating apparatus, the lifter (100) comprising:
   a first member (110) mounted at an inner side of a drum; and
   a second member (120) mounted on the first member (110) and protruded toward an inside of the drum,
   wherein the first member (110) comprises:
      a hook portion (112) protruded and formed along a circumference of the first member (110), at least part of which is disposed to cover an inner circumferential surface (22) of the drum when inserted into a fastening hole (24) of the drum and then slid in one direction; and
      a shielding portion (113) protruded and formed at an inner side of the first member (110) and configured to completely cover the fastening hole (24) when the hook portion (112) is inserted into the fastening hole (24) and then slid in one direction.
2. The lifter (100) of item 1, wherein the shielding portion (113) is formed at one side of the first member (110) to correspond to a rotational direction of the drum to prevent washing water from being discharged through the fastening hole (24).
3. The lifter (100) of item 1 or 2, wherein a plurality of shielding portions (113) are disposed to be separated from one another along one side circumference of the first member.
4. The lifter (100) of item 2 or 3, wherein the other side of the first member (110) is protruded and formed at an inner side of the first member (110) and configured to cover only part of the fastening hole (24) when the hook portion (112) is inserted into the fastening hole (24) and then slid in one direction so as to allow the introduction of washing water.
5. The lifter (100) of any one of items 1 to 4, wherein the first member (110) comprises a washing water inlet portion (115) formed to overlap with part of a hole formed on the drum to introduce washing water.
6. The lifter (100) of item 5, wherein the washing water inlet portion comprises a plurality of washing water inlet holes (115a) disposed to be separated from one another along a direction in parallel to a rotational axis of the washer drum.
7. A lifter (100) for a laundry treating apparatus, the lifter (100) comprising:
   a first member (110) mounted at an inner side of a drum; and
   a second member (120) mounted on the first member (110) and protruded toward an inside of the drum,
   wherein the second member (120) comprises:
      a body (121) protruded toward an inside of the drum to accommodate washing water therein; and
      a plurality of protrusion portions (123) located along a lower circumference of the body.
8. The lifter (100) of item 7, wherein a plurality of mounting holes (117) into which protrusion portions (123) of the second member (120) are inserted to be coupled to the second member (120) are formed on the first member (110) along a lower circumference.
9. The lifter (100) of item 8, wherein a protruding portion (123) of the second member (120) is inserted into a mounting hole (117) of the first member (110) and the protruding portion (123) is bent to couple the first member (110) to the second member (120).
10. The lifter (100) of any one of items 7 to 9, wherein the second member (120) comprises a plurality of washing water discharge holes (125) located at an upper portion of the body (121) and formed along one direction to discharge washing water accommodated in the body (121) from an outside of the drum.
11. The lifter (100) of any one of items 1 to 10, wherein a screw insertion hole (119) is formed at one side of the first member (110) to fix the first member (110) to an inner surface of the drum by screw fastening.
12. The lifter (100) of any one of items 1 to 11, wherein the first member (110) is formed of stainless steel, and the second member (120) is formed of plastic.

## Claims

1. A lifter (100) for a laundry treating apparatus, the lifter (100) comprising:
a first member (110) mounted at an inner surface of a drum; and
a second member (120) mounted on the first member (110), and protruded toward an inside of the drum,
wherein the first member (110) comprises a washing water inlet portion (115) formed to overlap with part of a hole formed on the drum to introduce washing water, and
wherein the second member (120) comprises a body (121) protruded toward an inside of the drum to accommodate washing water therein and a plurality of washing water discharge holes (125) located at an upper portion of the body (121) and formed along one direction to discharge washing water accommodated in the body (121) from an outside of the drum.

2. The lifter according to claim 1, wherein the washing water inlet portion (115) comprises a plurality of washing water inlet holes (115a) disposed to be separated from one another along a direction in parallel to a rotational axis of the washer drum.

3. The lifter according to claim 2, wherein each of the washing water inlet holes (115a) is formed in a central portion of the first member (110), and
a plurality of ribs are formed in a direction crossing the first member between the each of the washing water inlet holes (115a).

4. The lifter according to any one of claims 1 to 3, wherein the first member (110) comprises:
a hook portion (112) formed to protrude along a circumference of the first member (110), at least a part of which is disposed to cover an inner circumferential surface (22) of the drum when inserted into a fastening hole (24) of the drum and then slid in one direction;
a shielding portion (113) formed to protrude from an inner side of the first member (110) and extended from one end of the hook portion (112) in a direction contrary to the sliding direction of the hook portion (112) to completely cover the fastening hole (24) when the hook portion (112) is inserted into the fastening hole (24) and then slid in one direction, and
wherein the washing water accommodated in the second member is to prevent washing water from being discharged through the fastening hole (24) by the shielding portion (113).

5. The lifter according to any one of claims 1 to 4, wherein a groove is formed in a front surface of the first member (110) to fit a circumferential portion of the second member (120) thereinto, and the washing water accommodated in the second member (120) is restricted from flowing out through a gap between the first member (110) and the second member (120).

6. The lifter according to any one of claims 1 to 5, wherein the shielding portion (113) is inserted into the fastening hole (24) and then slid in any one direction to cover the fastening hole (24).

7. The lifter according to any one of claims 1 to 6, wherein a plurality of the shielding portions (113) are disposed to be separated from one another along one side circumference of the first member.

8. The lifter according to any one of claims 1 to 7, wherein the shielding portion (113) and the hook portion (112) are formed at positions adjacent to each other.

9. The lifter according to any one of claims 1 to 8, wherein the hook portion (112) is formed in a shape of a ring portion, and inserted into the fastening hole (24) of the drum and then slid in one direction to support the inner and outer surfaces of the drum, respectively.

10. The lifter according to any one of claims 1 to 9, wherein the hook portion (112) is formed in a shape bent outward from a rear portion of the first member (110).

11. The lifter according to any one of claims 1 to 10, wherein the hook portion (112) is formed to have a width smaller than that of the fastening hole of the drum, and each of the hook portions (112) is inserted into each of the fastening holes (24) and then slid to support the inner and outer surfaces of the drum, respectively.

12. The lifter according to any one of claims 1 to 11, wherein a plurality of the hook portions (112) are provided, and each of the hook portions (112) is formed at a symmetrical position with respect to a center portion of the first member (110).

13. The lifter according to any one of claims 1 to 12, wherein the first member (110) is made of plastic and the second member is made of stainless steel (120).

14. The lifter according to any one of claims 1 to 13, wherein the washing water discharge hole is formed on a recessed surface of the body (121).
